# EUROPÄISCHE PATENTSCHRIFT

(11) **EP 3 550 256 B1**
(45) Veröffentlichungstag und Bekanntmachung des Hinweises auf die Patenterteilung: **10.03.2021**
(21) Anmeldenummer: 18165805.5
(22) Anmeldetag: 05.04.2018
(51) Int. Cl.: G01B 11/02, B23K 26/03, B29C 65/00, G01B 11/27

(54) **ERKENNUNG EINER SCHWEISSNAHTGEOMETRIE**
DETECTION OF A WELD SEAM GEOMETRY
DÉTECTION D'UNE GÉOMÉTRIE DU CORDON DE SOUDURE

(43) Veröffentlichungstag der Anmeldung: 09.10.2019
(73) Patentinhaber: Georg Fischer Rohrleitungssysteme AG, 8201 Schaffhausen (CH)
(72) Erfinder: Reiz, Robert, 79780 Stühlingen (DE); Hasific, Edin, 8200 Schaffhausen (CH)
(74) Vertreter: Fenner, Seraina

(56) Entgegenhaltungen:
- US-A1- 2004 244 509
- US-A1- 2016 003 751
- US-A1- 2016 320 266

## Beschreibung

Die Erfindung betrifft ein Verfahren und eine Vorrichtung zur Erkennung einer Schweissnahtgeometrie einer Kunststoffstumpfschweissnaht zwischen Rohrleitungskomponenten vorzugsweise Kunststoffrohren, wobei die Vorrichtung eine Steuerung, einen optischen Sensor und eine Trägervorrichtung enthält, wobei die Trägervorrichtung einen Antrieb und eine Sensorachse zur Positionierung des Sensors aufweist, wobei der Antrieb eine Positionserkennung aufweist und mit einer Steuerung verbunden ist.

Eine Überprüfung einer Stumpfschweissung dient der Qualitätssicherung der Schweissung. Es spielt keine Rolle mit welchem Verfahren die Rohre bzw. Fittings stumpfgeschweisst wurden, sei es mittels berührungslosem IR-Schweissverfahrens, mittels des klassischen Stumpfschweissverfahrens durch Berühren des Heizspiegels oder eines anderen Verfahrens. Entsprechend den zu verschweissenden Rohren bzw. Fittings, das heisst, ihren Abmassen, deren Kunststoff, der Schweisstechnologie die angewandt wird, usw. hat eine Schweissnaht eine gewisse Form bzw. Grösse aufzuweisen, die optisch überprüfbar ist. Entsprechend dazu existieren Richtlinien bzw. Normen, welche genau definieren wie eine Naht aussehen muss bzw. wie die zulässigen Abmasse in Bezug auf die Rohr- bzw. Fitting- und Schweisseigenschaften sein müssen, damit sie den Anforderungen entspricht. Bisher wurde meist eine manuelle optische Beurteilung durch eine zuständige Fachperson durchgeführt, die anhand der ihr bekannten Normen und Richtlinien die entstandene Schweissnaht vergleicht und beurteilt.

Nachteilig hierbei ist, dass Beurteilungen durch eine Fachperson sehr zeitintensiv und somit sehr teuer sind. Zudem ist eine solche Beurteilung auch nicht konstant gleich, da der menschliche Faktor eine wesentliche Rolle spielt und die Überprüfung nicht immer durch dieselbe Fachperson stattfindet.

Die JP 2000289115A offenbart eine Prüfung einer Schweissung von Kunststoffrohren mittels eines Ultraschallsensors, wodurch auch eine Aussage bezüglich der Verschmelzung der Rohrwandung im Inneren, die nicht sichtbar ist, erzielt werden kann.

Nachteilig an dieser Prüfung ist der hohe Aufwand da eine derartige Prüfung sehr zeitintensiv ist, da die Platzierung der Ultraschallsensoren bzw. der Schweissnaht gegenüber der Ultraschallsensoren sehr genau erfolgen muss, was eine hohe Einrichtzeit erfordert.

Die EP 2 963 380 A1 offenbart eine Vorrichtung zum Überprüfen einer Stumpfschweissung, wobei diese Überprüfung in der Regel direkt in der Vorrichtung erfolgt in der das Rohr verschweisst wurde und dadurch kein genaues Ausrichten der Schweissnaht zum Sensor mehr notwendig ist.

Die US 2004/0244509 A1 offenbart ein Verfahren in dem eine manuelle Kontrolle mit Entfernung der Schweisswulst vorgenommen wird.

Die US 2016/0320266 A1 offenbart eine Vorrichtung die die äussere Oberfläche einer Rohrleitung kontrolliert.

Nachteilig hierbei ist, dass die Überprüfung nur direkt nach der Verschweissung stattfinden und nicht in einer separaten ev. späteren Prüfung erfolgen kann, da ein nachträgliches Einspannen in die Vorrichtung und ein entsprechendes Ausrichten kaum möglich ist.

Es ist Aufgabe der Erfindung ein Verfahren und eine damit verbundene Vorrichtung vorzuschlagen, welches ein schnelles und einfaches Durchführen einer optischen Überprüfung einer Stumpfschweissnaht zulässt, indem eine genaue Positionierung der Schweissnaht zum Sensor vermieden werden kann.

Diese Aufgabe wird erfindungsgemäss dadurch gelöst, dass das Verfahren zur Erkennung einer Schweissnahtgeometrie einer Kunststoffstumpfschweissnaht zwischen Rohrleitungskomponenten vorzugsweise Kunststoffrohren folgende Schritte beinhaltet:
- grobes, manuelles Positionieren eines optischen Sensors gegenüber einer Stumpfschweissnaht zwischen Rohrleitungskomponenten vorzugsweise Kunststoffrohren, vorzugsweise am Rohraussendurchmesser, wobei die Sensorausrichtung annähernd rechtwinklig zur Rohrmittelachse erfolgt,
- automatisches bzw. autonomes Anfahren des Sensors von Messpositionen entlang oder um eine Sensorachse ,
- erfassen der sichtbaren Schweissnahtgeometrie bzw. der Daten mittels Sensor in jeder angefahrenen Messposition,
- ermitteln der optimalen Messposition durch die erfassten Daten vorzugsweise mittels eines Algorithmus,
- automatisches bzw. autonomes Anfahren des Sensors der optimalen Messposition entlang oder um die Sensorachse,
- erfassen der Schweissnahtgeometrie zur Bestimmung der Qualität der Schweissnaht,
- Auswerten und Bewerten der Messung der erfassten Schweissnahtgeometrie an optimierter Messposition.

Ein optischer Sensor wird grob, manuell positioniert gegenüber einer Stumpfschweissnaht die zwischen den verschweissten Rohrleitungskomponenten vorzugsweise Kunststoffrohren verläuft. Vorzugsweise wird der optische Sensor direkt am Rohraussendurchmesser angeordnet, beispielsweise mittels eines Befestigungsrings oder einem sonstigen einfachen Befestigungsmittel. Die Sensorausrichtung ist annähernd rechtwinklig zur Rohrachse ausgerichtet, wobei eine leichte Verschiebung durchaus vom Sensor aufgenommen bzw. selbständig korrigiert wird.

Der Sensor fährt automatisch bzw. autonom entlang bzw. um eine Sensorachse Messpositionen an, an denen er die Schweissnaht bzw. die Schweissnahtbreite und oder das K-Mass erfasst.

An den Messpositionen, die vorzugsweise über die Steuerung definiert sind, erfasst der Sensor die sichtbare Schweissnahtgeometrie. Durch die grobe, manuelle Positionierung des Sensors gegenüber der Schweissnaht muss der Sensor um eine genaue Auswertung über die Qualität bzw. die Schweissnahtgeometrie zu ermöglichen zuerst die optimale Messposition der Schweissnaht finden bei der der Sensor direkt bzw. senkrecht auf die Schweissnaht gerichtet ist ohne seitliche Verschiebung bzw. auch ohne Schräglage des Sensors zur Schweissnaht. Dazu werden mindestens drei Messpositionen angefahren und die entsprechenden Schweissnahtgeometrien erfasst, vorzugsweise jeweils die Schweissnahtbreite und/oder das K-Mass.

Aus den zuvor erfassten Daten wird dann die optimale Messposition vorzugsweise mittels eines Algorithmus ermittelt. Die optimale Messposition ist an der Stelle an der die Schweissnahtbreite oder auch das K-Mass am geringsten ist da bei der frontalen Draufsicht auf die Schweissnaht keine Verbreiterung durch Parallaxe entsteht. Wobei es ausreicht wenn nur die Breiten oder die K-Masse erfasst werden um die optimale Messposition zu ermitteln.
Aufgrund der ermittelten, optimalen Messposition fährt der Sensor entlang oder um die Sensorachse in diese optimale Messposition.

Dort erfasst er wiederum die Schweissnahtgeometrie, welche dann der Auswertung und Bewertung der Qualität und der Masshaltigkeit der Schweissnaht dient. Vorzugsweise wird die Auswertung und Bewertung mittels der Steuerung durchgeführt und beruht auf vordefinierten Werte aufgrund derer die aufgenommene Schweissnahtgeometrie verglichen wird.

Vorteilhaft ist es, wenn während des automatischen bzw. autonomen Anfahrens des Sensors der Messpositionen entlang oder um die Sensorachse mindestens drei Messpositionen zum Erfassen der sichtbaren Schweissnahtgeometrie angefahren werden. Dadurch kann die optimale Messposition vorzugsweise mittels Algorithmus ermittelt werden. Selbstverständlich sind auch mehr Messpositionen entlang oder um die Sensorachse möglich. Bevorzugterweise werden jeweils die beiden Extrempositionen jeweils ganz aussen liegend an der Sensorachse angefahren und die dortige Schweissnahtgeometrie vorzugsweise die Schweissnahtbreite und/oder das K-Mass erfasst um in die Berechnung der optimalen Messposition einzufliessen, wie auch die äusseren Extrempositionen beim Schwenken des Sensors um die Sensorachse angefahren werden.

Als vorteilhaft hat sich gezeigt, dass die Schweissnahtbreite und/oder das K-Mass mittels Sensor in jeder angefahrenen Messposition erfasst werden. Diese Messdaten werden dann zur Ermittlung der optimalen Messposition genutzt, da die optimale Messposition ausschlaggebend für die Ermittlung der Schweissnahtgeometrie zur Qualitätsbestimmung ist, da nur in dieser Position in der der Sensor geradlinig bzw. senkrecht auf die Schweissnaht gerichtet ist eine korrekte Aufnahme der Schweissnaht ohne Parallaxe bzw. Bildverzerrung erfasst wird.

Gemäss einer bevorzugten Ausführungsform ermittelt der Algorithmus die optimale Messposition durch die erfassten sichtbaren Schweissnahtgeometrien bzw. Messdaten, insbesondere durch die erfassten Schweissnahtbreiten und/oder die K-Masse, wobei die optimale Messposition die Position ist an der die geringste Schweissnahtbreite und/oder das geringste K-Mass vorliegt da keine Bildverzerrung herrscht. An der optimalen Messposition ist der Sensor mittig bzw. annähernd senkrecht auf die Schweissnaht gerichtet was eine Bildverzerrung verhindert und eine optimale Aufnahme der Schweissnahtgeometrie zur Qualitätskontrolle zulässt. Vorzugsweise wird der Algorithmus zur Ermittlung der optimalen Messposition aufgrund der erfassten Daten durch ein Polynom bestimmt. Das Polynom kann exakt durch die ermittelten Messdaten wie auch annähernd durch den Bereich der Messdaten verlaufen.
Die optimale Messposition wird vorzugsweise durch den tiefsten Punkt des Polynoms gebildet oder durch einen Messpunkt, der aufgrund einer annähernden Polynombildung tiefer liegt als der tiefste Punkt des Polynoms bzw. der einen tieferen Wert aufweist.

Es ist vorteilhaft wenn das automatische Anfahren des Sensors von Messpositionen entlang einer Sensorachse verläuft die parallel zur Rohrachse ausgerichtet ist. Durch den bekannten Abstand zwischen Sensor und dem Rohr sowie dem Öffnungswinkel der zwischen der einen Kante der Schweissnaht und dem Sensor, welches eine fiktive Gerade bildet, und der anderen Kante und dem Sensor, welches eine weitere fiktive Gerade bildet, vorliegt, kann somit der Versatz entlang der Rohrachse des Sensors zur Schweissnaht bzw. zur optimalen Messposition somit zur Mitte der Schweissnaht ermittelt werden. Jedoch werden dazu mindestens drei Messpunkte benötigt.

Eine alternative Ausgestaltung des Verfahrens besteht darin, dass die Sensorachse annähernd senkrecht zur Rohrmittelachs verläuft, wobei der Sensor an der Sensorachse schwenkbar angeordnet ist. Vorzugsweise ist der Sensor als Kamera ausgebildet die ein telezentrisches Objektiv aufweist, welche ein zylindrisch verlaufendes Blickfeld aufweist. Bei dieser Art von Objektiv liegt der Unterschied zum Standardobjektiv welches ein kegelförmiges Blickfeld aufweist darin, dass dieses ein zylindrisch verlaufendes Blickfeld aufweist. Dadurch muss hier die Schweissnaht nicht zwingend in der Mitte des Blickfelds angeordnet sein wie bei einem Standardobjektiv, vielmehr muss das Objektiv senkrecht auf die Schweissnaht gerichtet sein bzw. die optische Achse des Objektivs muss rechtwinklig auf die Rohrmittelachse gerichtet sein.

Diese Aufgabe wird erfindungsgemäss dadurch gelöst, dass die Sensorachse sich parallel oder senkrecht zur Rohrleitungsachse erstreckt und der Sensor entlang oder um die Sensorachse verfahrbar oder schwenkbar ist wobei die Steuerung die Auswertung und Bewertung der aufgenommenen Schweissnahtgeometrie aufgrund vordefinierter Werte durchführt.

Die erfindungsgemässe Vorrichtung zur Durchführung des Verfahrens zur Erkennung einer Schweissnahtgeometrie einer Kunststoffstumpfschweissnaht zwischen Rohrleitungskomponenten vorzugsweise Kunststoffrohren ist im Anspruch 8 definiert. Die Vorrichtung weist einen optischen Sensor und eine Trägervorrichtung auf, wobei die Trägervorrichtung einen Antrieb und eine Sensorachse zur Positionierung des Sensors enthält. Die Sensorachse ist parallel oder senkrecht zur Rohrleitungsachse ausgerichtet und der Sensor ist entlang oder um die Sensorachse verfahrbar oder schwenkbar bzw. drehbar.

Als vorteilhaft hat sich gezeigt, wenn die erfindungsgemässe Vorrichtung direkt am Rohraussendurchmesser befestigt ist, beispielsweise mit einem Band oder einem Ring an dem die Vorrichtung befestigt ist und der am Rohr angeordnet wird, wobei auch ein unabhängig vom Rohr vorgesehener Support für die Vorrichtung denkbar ist in den das Rohr eingelegt werden kann.

Als vorteilhaft hat sich gezeigt, wenn der Sensor als Kamera ausgebildet ist und ein normales bzw. Standardobjektiv oder ein telezentrisches Objektiv aufweist. Bei der Verwendung eines telezentrischen Objektives ist es von Vorteil wenn eine rechtwinklig bzw. senkrecht zur Rohrmittelachse verlaufende Sensorachse verwendet wird um welche der Sensor bzw. die Kamera mit telezentrischem Objektiv geschwenkt wird, da ein telezentrisches Objektiv nur ein geradverlaufendes bzw. zylindrisches Blickfeld aufweist und somit die Kamera bzw. das Objektiv sich schwenkbar gegenüber der Schweissnaht ausrichten muss um die optimale Messposition zu erlangen und Bildverzerrungen zu vermeiden. Hingegen bei einem Standardobjektiv welches ein kegelförmiges Blickfeld aufweist ist es wichtig um Bildverzerrungen zu vermeiden, dass die Schweissnaht in der Mitte des Blickfelds ist, weshalb die Ausrichtung über eine parallel zur Rohrleitung verlaufende Sensorachse erfolgt.

Es ist vorteilhaft wenn der Antrieb als Schrittmotor mit eine Spindel ausgebildet ist, wobei auch Linearmotoren denkbar sind. Der komplette Vorgang zur Erfassung der Schweissnahtgeometrie und zu dessen Auswertung dauert wenige Sekunden, vorzugsweise zwischen 1 und 20 Sekunden, wobei speziell bevorzugt eine Durchführung in 1 und 12 Sekunden erfolgt.

Der Antrieb weist vorzugsweise eine Positionserkennung auf, die vorzugsweise mit einer Steuerung verbunden ist. Dadurch kann ermittelt werden an welcher Stelle der Sensor steht und mittels den Berechnungen und den ermittelten Messdaten kann die optimale Messposition, die auch über die Positionserkennung abläuft, angefahren werden.

Alle Ausgestaltungmöglichkeiten sind untereinander frei kombinierbar, sowie die Verfahrensmerkmale auch mit den Vorrichtungsmerkmalen kombinierbar sind.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine schematische Darstellung der Anordnungen der erfindungsgemässen Vorrichtung zur Durchführung des erfindungsgemässen Verfahrens während des Anfahrens von Messpositionen mit Standardobjektiv,
- Fig. 2: eine schematische Darstellung der Anordnungen der erfindungsgemässen Vorrichtung zur Durchführung des erfindungsgemässen Verfahrens in optimaler Messpositionen mit Standardobjektiv,
- Fig. 3a: eine Aufnahme des Sensors in optimaler Messposition
- Fig. 3b: eine Aufnahme des Sensors in einer Messposition zur Ermittlung der optimalen Messposition,
- Fig. 4: einen Längsschnitt durch ein Rohr mit einer Schweissnaht,
- Fig. 5: schematische Darstellung der erfassten Messposition und dadurch ermittelten optimalen Messposition,
- Fig. 6: eine dreidimensionale Ansicht einer erfindungsgemässen Vorrichtung.
- Fig. 7: eine schematische Darstellung der Anordnungen der erfindungsgemässen Vorrichtung zur Durchführung des erfindungsgemässen Verfahrens während des Anfahrens von Messpositionen mit telezentrischem Objektiv und ,
- Fig. 8: eine schematische Darstellung der Anordnungen der erfindungsgemässen Vorrichtung zur Durchführung des erfindungsgemässen Verfahrens in optimaler Messpositionen mit telezentrischem Objektiv.

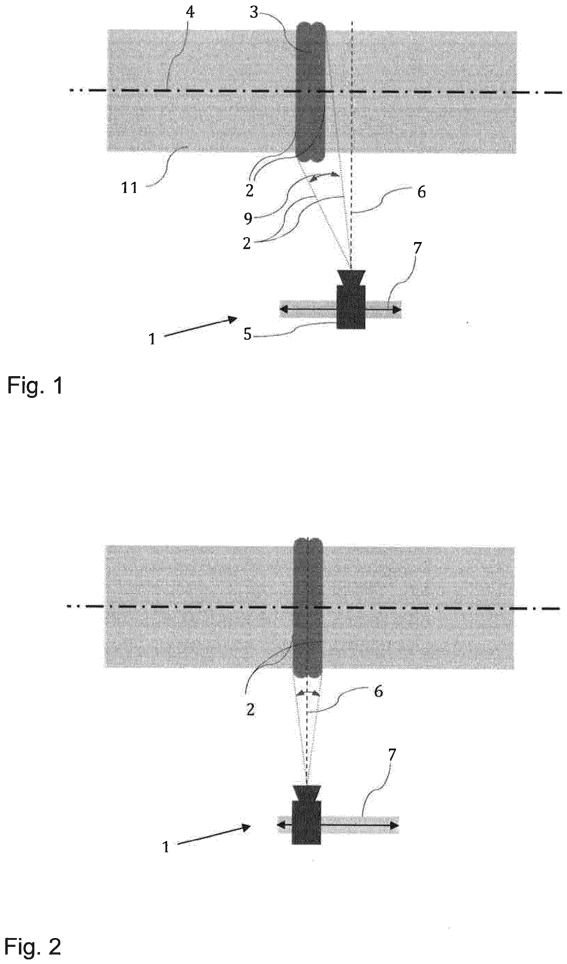

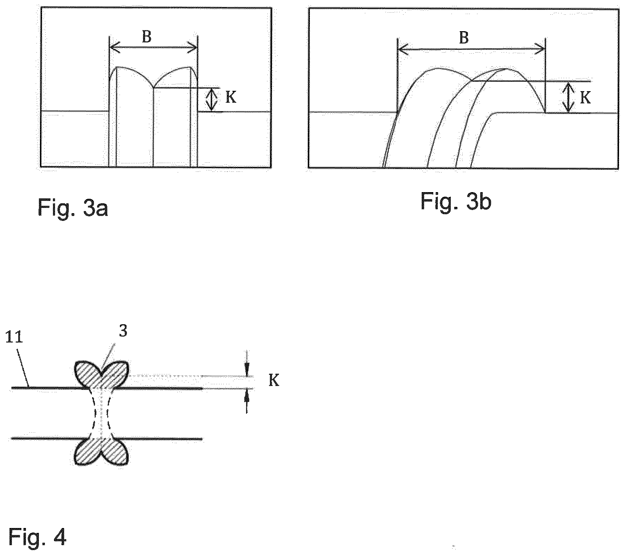

Die in Fig. 1 dargestellte Zeichnung zeigt eine schematische Darstellung einer erfindungsgemässen Vorrichtung 1. In dieser Position des Sensors 5 werden unterschiedliche Positionen entlang der Sensorachse 7 angefahren um die Schweissnahtgeometrie vorzugsweise die Schweissnahtbreite B und/oder des K-Mass K zu erfassen. Aus den Fig. 3a und 3b ist der Unterschied zwischen den aufgenommenen Bildern des Sensors 5 gut erkennbar. Fig. 3b zeigt eine Aufnahme in der der Sensor 5 nicht an der optimalen Messposition opt. M, also mittig vor der Schweissnaht positioniert ist und somit die Breite B und das K-Mass K grösser ausfällt. Solche Aufnahmen werden an mindestens drei Positionen entlang der Sensorachse 7 aufgenommen, was das Minimum an erfassten Messdaten ist um die optimale Messposition zu ermitteln bzw. zu errechnen. Durch den bekannten Abstand des Sensors 5 zum Rohr 11 sowie den Öffnungswinkel 9 des Objektivs und der beiden erfassten sichtbaren Kanten 2 der Schweissnaht 3 ergibt sich die Schweissnahtbreite B bzw. wo die optimale Messposition opt. M ohne Verzerrung der Breite bzw. des K-Masses K aufgenommen werden kann, welche dann der Auswertung der Schweissnahtqualität dient.

In Fig. 2 ist aufgezeigt wenn der Sensor 5 in der optimalen Messposition positioniert ist zur Aufnahme der Schweissnahtgeometrie, welche der Auswertung und Bewertung der Naht dient. Gut erkennbar ist, dass der Sensor 5 bzw. die optische Achse 6 mittig auf die Schweissnaht gerichtet ist, wodurch eine Parallaxe vermieden werden kann, was relevant bei der Auswertung und Bewertung der Schweissnahtqualität ist.

Fig. 4 zeigt ein verschweisstes Rohr 11 bei dem die Schweissnaht 3 geschnitten dargestellt ist um aufzuzeigen, welches Mass neben der Schweissnahtbreite B, nämlich das K-Mass K noch der Ermittlung der optimalen Messposition dient. Dieses Mass K kann separat anstatt der Breite B ermittelt werden, wie aber auch in Kombination.

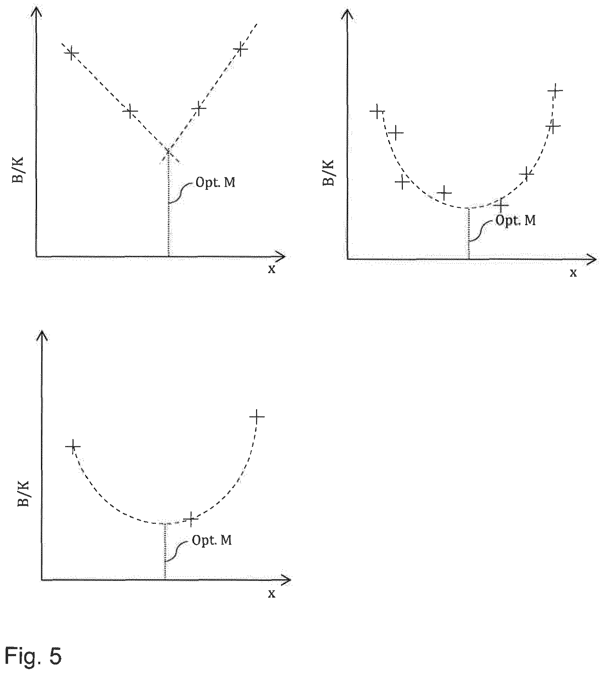

Fig. 5 zeigt Diagramme bei denen die ermittelten Messpunkte zur Ermittlung der optimalen Messposition als Kreuze dargestellt sind. Diese wurden während des Anfahrens der unterschiedlichen Positionen entlang der Sensorachse erfasst, mit welchen dann die optimale Messposition opt. M vorzugsweise aufgrund eines Algorithmus ermittelt wurde. Die vertikale Achse B/K zeigt das gemessene Mass der Breite der Schweissnaht B oder des K-Masses K der Schweissnaht auf und die horizontale die entsprechend Position x des Sensors auf der Sensorachse oder die Winkeleinstellung an der Sensorachse.

Im ersten Diagramm ist erkennbar, dass die optimale Messposition opt. M auch durch den Schnittpunkt zweier Geraden definiert werden kann, die aufgrund der Messpunkte ermittelt werden können.
Alternativ ist die Methode mittels eine Polynoms dargestellt, der nicht exakt durch die Messpunkte verläuft sondern annähernd durch die Messpunkte. Dadurch kann es vorkommen, dass ein ermittelter Messpunkt tiefer liegt als der tiefste Punkt des Polynomverlaufs. In einem solchen Fall wird vorzugsweise der tiefere einzelne Punkt als optimaler Messpunkt opt. M verwendet, wobei in Fig. 5 im zweiten Diagramm der tiefste Punkt auf der Kurve liegt und der einzelne Punkt leicht höher angeordnet ist. Das letzte Diagramm zeigt wiederum einen Polynomverlauf auf, der genau durch die Messpunkte verläuft.

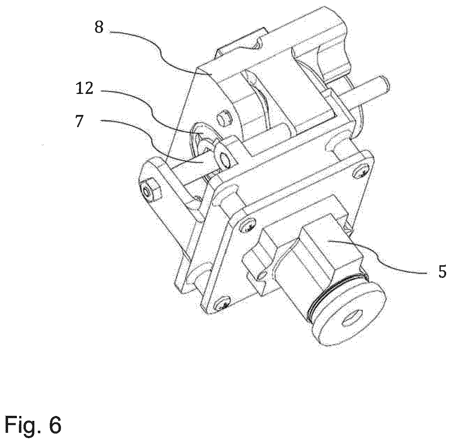

In Fig. 6 ist die erfindungsgemässe Vorrichtung 1 dreidimensional dargestellt wobei sie hier unabhängig von einem Rohr aufgezeigt ist. Die Vorrichtung 1 weist eine Trägervorrichtung 8 auf an der ein Antrieb 10 angeordnet ist und der eine Sensorachse 7 zur genauen Positionierung des Sensors 5 aufweist. Der Sensor 5 ist vorzugsweise als Kamera mit einem hier entsprechend Standardobjektiv ausgebildet, wobei oder auch ein telezentirisches Objektiv eingesetzt werden kann jedoch der die Anordnung der Sensorachse und des Antriebs dann leicht verändert ist.

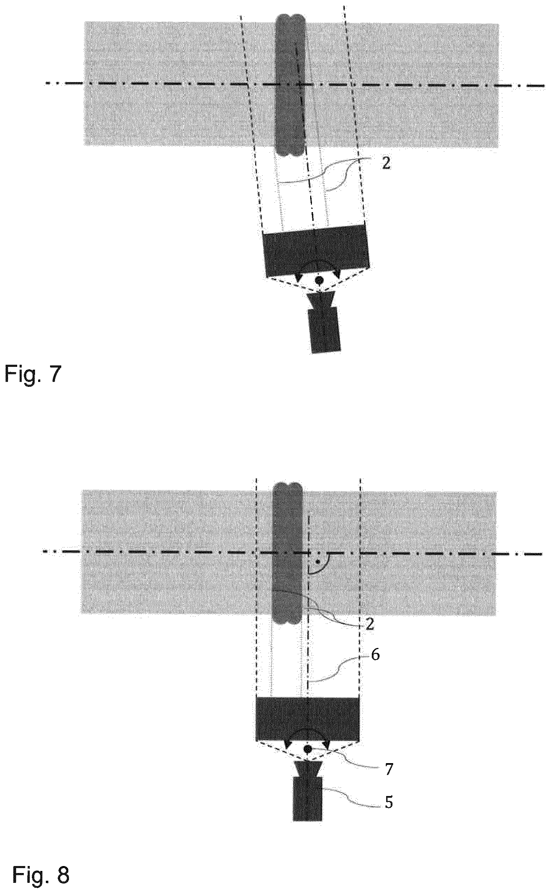

Die in Fig. 7 und 8 geeignet schematischen Figuren entsprechen den Fig. 1 und 2 jedoch mit telezentrischem Objektiv anstatt einem Standardobjektiv. Hierbei ist gut ersichtlich, dass bei einem telezentrischen Objektiv das Blickfeld zylindrisch verläuft und somit ein Versatz bzw. eine Bildverzerrung durch ein Schwenken des Sensors 5 an der Sensorachse 7 ausgeglichen wird, damit die optische Achse 6 in der optimalen Messposition opt. M dann rechtwinklig auf die Rohrmittelachse 4 gerichtet ist. Jedoch muss bei dieser Ausführungsform die Schweissnaht nicht in der Mitte des Blickfelds des Sensors liegen.

### Bezugszeichenliste

- 1: Vorrichtung zur Erkennung einer Schweissnahtgeometrie einer Kunststoffstumpfschweissnaht
- 2: Kante Schweissnaht
- 3: Schweissnaht
- 4: Rohrmittelachse
- 5: Sensor
- 6: Optische Achse des Objektives, mittig zur Schweissnaht bei Standardobjektiv, rechtwinklig zur Rohrmittelachse bei telezentrischem Objektiv (opt. Messpostion)
- 7: Sensorachse
- 8: Trägervorrichtung
- 9: Öffnungswinkel
- 10: Antrieb
- 11: Rohr

- K: gemessenes K-Mass
- B: gemessene Schweissnahtbreite
- Opt. M: optimale Messposition
- X: Position auf Sensorachse

## Patentansprüche

1. Verfahren zur Erkennung einer Schweissnahtgeometrie einer Kunststoffstumpfschweissnaht (3) zwischen Rohrleitungskomponenter, vorzugsweise Kunststoffrohren (11), beinhaltend folgende Schritte:
• grobes, manuelles Positionieren eines optischen Sensors (5) gegenüber einer Stumpfschweissnaht (3) zwischen Rohrleitungskomponenten, vorzugsweise Kunststoffrohren,
vorzugsweise am Rohraussendurchmesser, wobei die Sensorausrichtung annähernd rechtwinklig zur Rohrmittelachse (4) erfolgt,
• automatisches Anfahren des Sensors von Messpositionen entlang oder um eine Sensorachse (7),
• erfassen der sichtbaren Schweissnahtgeometrie bzw. der Daten mittels Sensor (5) in jeder angefahrenen Messposition,
• ermitteln der optimalen Messposition (opt. M) durch die erfassten Daten vorzugsweise mittels eines Algorithmus,
• automatisches Anfahren des Sensors (5) der optimalen Messposition (opt. M) entlang oder um die Sensorachse (7),
• erfassen der Schweissnahtgeometrie zur Bestimmung der Qualität der Schweissnaht,
• Auswerten und Bewerten der Messung der erfassten Schweissnahtgeometrie an optimierter Messposition.

2. Verfahren nach Anspruch 1, **dadurch gekennzeichnet, dass** während des automatischen Anfahrens des Sensors der Messpositionen entlang oder um die Sensorachse (7) mindestens drei Messpositionen zum Erfassen der sichtbaren Schweissnahtgeometrie angefahren werden.

3. Verfahren nach einem der Ansprüche 1 oder 2, **dadurch gekennzeichnet, dass** die Schweissnahtbreite (B) und/oder das K-Mass (K) mittels Sensor (5) in jeder angefahrenen Messposition erfasst werden.

4. Verfahren nach einem der Ansprüche 1 bis 3, **dadurch gekennzeichnet, dass** der Algorithmus die optimale Messposition (opt. M) durch die erfassten sichtbaren Schweissnahtgeometrien, insbesondere durch die erfassten Schweissnahtbreiten (B) und/oder die K-Masse (K) ermittelt, wobei die optimale Messposition (opt. M) die Position ist an, der die geringste Schweissnahtbreite (B) und/oder das geringste K-Mass (K) und keine Bildverzerrung vorliegt.

5. Verfahren nach einem der Ansprüche 1 bis 4, **dadurch gekennzeichnet, dass** ein Algorithmus zur Ermittlung der optimalen Messposition aufgrund der erfassten Daten durch ein Polynom bestimmt wird.

6. Verfahren nach einem der vorangehenden Ansprüche, **dadurch gekennzeichnet, dass** das automatische Abfahren des Sensors von Messpositionen entlang einer Sensorachse verläuft die parallel zur Rohrachse ausgerichtet ist.

7. Verfahren nach einem der vorangehenden Ansprüche, **dadurch gekennzeichnet, dass** das automatische Anfahren des Sensors (5) von Messpositionen um eine Sensorachse (7) verläuft, wobei die Sensorachse (7) als Drehachse bzw. Drehpunkt des Sensors (5) dient und annähernd senkrecht zur Rohrmittelachse (4) verläuft.

8. Vorrichtung konfiguriert zur Durchführung des Verfahrens nach einem der Ansprüche 1 bis 7 enthaltend eine Steuerung, einen optischen Sensor (5) und eine Trägervorrichtung (8), wobei die Trägervorrichtung (8) einen Antrieb (10) und eine Sensorachse (7) zur Positionierung des Sensors (5) aufweist, wobei der Antrieb (10) eine Positionserkennung aufweist und mit einer Steuerung verbunden ist, **dadurch gekennzeichnet, dass** sich die Sensorachse (5) parallel oder senkrecht zur Rohrleitungsachse (4) erstreckt und der Sensor (5) entlang oder um die Sensorachse (7) verfahrbar oder drehbar bzw. schwenkbar ist, wobei die Steuerung die Auswertung und Bewertung der aufgenommenen Schweissnahtgeometrie aufgrund vordefinierter Werte durchführt.

9. Vorrichtung nach Anspruch 8, **dadurch gekennzeichnet, dass** der Sensor (5) als Kamera ausgebildet ist und ein normales bzw. ein Standardobjektiv oder ein telezentrisches Objektiv aufweist.

10. Vorrichtung nach Anspruch 8, **dadurch gekennzeichnet, dass** der Antrieb (10) als Schrittmotor mit einer Spindel ausgebildet ist.

## Claims

1. Method for sensing a weld seam geometry of a plastic butt weld seam (3) between pipeline components, preferably plastic pipes (11), including the following steps:
• rough manual positioning of an optical sensor (5) in relation to a butt weld seam (3) between pipeline components, preferably plastic pipes, preferably at the pipe external diameter, wherein the sensor is aligned approximately perpendicularly to the pipe centre axis (4),
• automatic approaching by the sensor of measurement positions along or around a sensor axis (7),
• acquiring the visible weld seam geometry and/or the data by means of the sensor (5) in each approached measurement position,
• determining the optimum measurement position (opt. M) by way of the acquired data, preferably by means of an algorithm,
• automatic approaching by the sensor (5) of the optimum measurement position (opt. M) along or around the sensor axis (7),
• acquiring the weld seam geometry to determine the quality of the weld seam,
• analyzing and judging the measurement of the acquired weld seam geometry at the optimized measurement position.

2. Method according to Claim 1, **characterized in that**, during the automatic approaching by the sensor of the measurement positions along or around the sensor axis (7), at least three measurement positions are approached to acquire the visible weld seam geometry.

3. Method according to one of Claims 1 or 2, **characterized in that** the weld seam width (B) and/or the K dimension (K) are acquired by means of the sensor (5) in each approached measurement position

4. Method according to one of Claims 1 to 3, **characterized in that** the algorithm determines the optimum measurement position (opt. M) by way of the acquired visible weld seam geometries, in particular by way of the acquired weld seam widths (B) and/or the K dimensions (K), wherein the optimum measurement position (opt. M) is the position at which the smallest weld seam width (B) and/or the smallest K dimension (K) and no image distortion is present.

5. Method according to one of Claims 1 to 4, **characterized in that** an algorithm for determining the optimum measurement position on the basis of the acquired data is defined by a polynomial.

6. Method according to one of the preceding claims, **characterized in that** the automatic approaching by the sensor of measurement positions extends along a sensor axis which is aligned parallel to the pipe axis.

7. Method according to one of the preceding claims, **characterized in that** the automatic approaching by the sensor (5) of measurement positions extends around a sensor axis (7), wherein the sensor axis (7) is used as the rotational axis or pivot point of the sensor (5) and extends approximately perpendicularly to the pipe centre axis (4).

8. Device configured for carrying out the method according to any one of Claims 1 to 7 containing a controller, an optical sensor (5) and a carrier device (8), wherein the carrier device (8) has a drive (10) and a sensor axis (7) for positioning of the sensor (5), wherein the drive (10) has a position sensing unit and is connected to a controller, **characterized in that** the sensor axis (7) extends parallel or perpendicularly to the pipeline axis (4) and the sensor (5) is movable along or rotatable and/or pivotable along or around the sensor axis (7), wherein the controller carries out the analysis and judgement of the recorded weld seam geometry on the basis of predefined values.

9. Device according to Claim 8, **characterized in that** the sensor (5) is designed as a camera and has a normal or standard objective lens or a telecentric objective lens.

10. Device according to Claim 8, **characterized in that** the drive (10) is designed as a stepping motor having a spindle.

## Revendications

1. Procédé de détection de la géométrie d'un cordon de soudure bout à bout (3) en matière synthétique entre des composants de canalisation, de préférence des tubes (11) en matière synthétique, le procédé comprenant les étapes suivantes :
• positionner manuellement et grossièrement un capteur optique (5) en face d'un cordon de soudure bout à bout (3) entre des composants de canalisation, de préférence des tubes, de préférence sur le diamètre extérieur de tube, le capteur étant orienté approximativement à angle droit par rapport à l'axe de tube central (4),
• approcher automatiquement le capteur de positions de mesure le long ou autour d'un axe de capteur (7),
• détecter la géométrie visible du cordon de soudure ou les données au moyen d'un capteur (5) dans chaque position de mesure approchée,
• déterminer la position de mesure optimale (opt. M) par le biais des données détectées, de préférence à l'aide d'un algorithme,
• approcher automatiquement le capteur (5) de la position de mesure optimale (opt. M) le long ou autour de l'axe du capteur (7),
• détecter la géométrie du cordon de soudure pour déterminer la qualité du cordon de soudure,
• évaluer et exploiter la mesure de la géométrie du cordon de soudure détectée à une position de mesure optimisée.

2. Procédé selon la revendication 1, **caractérisé en ce que**, lors de l'approche automatique du capteur des positions de mesure le long ou autour de l'axe de capteur (7), au moins trois positions de mesure sont approchées pour détecter la géométrie visible du cordon de soudure.

3. Procédé selon l'une des revendications 1 et 2, **caractérisé en ce que** la largeur (B) du cordon de soudure et/ou la K-masse (K) sont détectées au moyen d'un capteur (5) dans chaque position de mesure approchée.

4. Procédé selon l'une des revendications 1 à 3, **caractérisé en ce que** l'algorithme détermine la position de mesure optimale (opt. M) à l'aide des géométries de cordon de soudure visibles détectées, en particulier les largeurs de cordon de soudure détectées (B) et/ou la K-masse (K), la position de mesure optimale (opt. M) étant la position où il y a la plus petite largeur de cordon de soudure (B) et/ou la plus petite K-masse (K) et où il n'y a aucune distorsion d'image.

5. Procédé selon l'une des revendications 1 à 4, **caractérisé en ce qu'**un algorithme de détermination de la position de mesure optimale à partir des données détectées est déterminé par un polynôme.

6. Procédé selon l'une des revendications précédentes, **caractérisé en ce que** l'approche automatique du capteur des positions de mesure est effectuée le long d'un axe de capteur qui est orienté parallèlement à l'axe de tube.

7. Procédé selon l'une des revendications précédentes, **caractérisé en ce que** l'approche automatique du capteur (5) des positions de mesure est effectuée autour d'un axe de capteur (7), l'axe de capteur (7) servant d'axe de rotation ou de point de rotation du capteur (5) et s'étendant approximativement perpendiculairement à l'axe de tube central (4).

8. Dispositif conçu pour mettre en œuvre le procédé selon l'une des revendications 1 à 7 et comprenant une commande, un capteur optique (5) et un dispositif porteur (8), le dispositif porteur (8) comportant un entraînement (10) et un axe de capteur (7) pour positionner le capteur (5), l'entraînement (10) comportant une détection de position et étant relié à une commande, **caractérisé en ce que** l'axe de capteur (7) s'étend parallèlement ou perpendiculairement à l'axe de canalisation (4) et le capteur (5) peut être déplacé en translation ou en rotation ou bien à pivotement le long ou autour de l'axe de capteur (7), la commande effectuant l'évaluation et l'exploitation de la géométrie du cordon de soudure détectée sur la base de valeurs prédéfinies.

9. Dispositif selon la revendication 8, **caractérisé en ce que** le capteur (5) est conçu comme une caméra et comporte un objectif normal ou standard ou un objectif télécentrique.

10. Dispositif selon la revendication 8, **caractérisé en ce que** l'entraînement (10) est réalisé sous la forme d'un moteur pas à pas pourvu d'une broche.
